# EUROPÄISCHE PATENTSCHRIFT

(11) **EP 0 832 785 B1**
(45) Veröffentlichungstag und Bekanntmachung des Hinweises auf die Patenterteilung: **28.02.2001**
(21) Anmeldenummer: 97116319.1
(22) Anmeldetag: 19.09.1997
(51) Int. Cl.: B60Q 1/115, F21V 7/00

(54) **Verfahren zur Anpassung eines Fahrzeuglichtes und Scheinwerfereinheit**
Process for adapting the vehicle lights and headlamp units
Dispositif pour adapter l'éclairage et les phares d'un véhicule

(30) Priorität: 26.09.1996 DE 19639526
(43) Veröffentlichungstag der Anmeldung: 01.04.1998
(73) Patentinhaber: Hella KG Hueck & Co., 59552 Lippstadt (DE)
(72) Erfinder: Eichhorn, Karsten, Dr., 59320 Ennigerloh (DE); Kalze, Franz-Josef, 33428 Harsewinkel (DE); Plattfaut, Christian, 59558 Lippstadt (DE)

(56) Entgegenhaltungen:
- EP-A- 0 331 928
- EP-A- 0 581 679
- EP-B- 0 661 193
- FR-A- 1 450 118
- US-A- 3 492 474
- US-A- 5 171 082

## Beschreibung

Die Erfindung betrifft ein Verfahren zur Anpassung eines Fahrzeuglichtes bei Kurvenfahrten nach dem Oberbegriff des Patentanspruchs 1.

Die Erfindung betrifft weiterhin eine Scheinwerfereinheit zur Erzeugung eines Kurvenlichtes nach dem Oberbegriff des Patentanspruchs 7.

Zur Anpassung eines Fahrzeuglichtes bei Kurvenfahrten sind Scheinwerfer bekannt, die in Abhängigkeit von einem Kurvenradius bzw. Lenkeinschlag um eine vertikale Achse verschwenkt werden. Dies bedarf einer zusätzlichen Schwenkeinrichtung, ist kostenintensiv und zudem mit einem erhöhten Platzbedarf in der Karosserie eines Fahrzeuges verbunden.

Weiterhin ist aus der gattungsgemäßen EP 0 661 193 A1 ein Scheinwerfer bekannt, dessen Reflektor in einem oberen Bereich in zwei über elektrische Signale bewegliche Segmente aufgeteilt ist. Die beweglichen Segmente werden in Abhängigkeit von einer seitlichen Neigung eines Motorrades die von einem Sensor registriert wird, gesteuert. Eine solche Steuerung einzelner Reflektor-Segmente ist mechanisch aufwendig, teuer und störanfällig. Andererseits ist es natürlich sinnvoll, auch bei Kurvenfahrten die Straßenränder seitlich gut auszuleuchten, ohne beim Geradeausfahren entgegenkommenden Verkehr zu blenden.

Aufgabe der vorliegenden Erfindung ist es daher, ein preisgünstiges sicheres und einfaches Verfahren zu schaffen, dass die Straßenränder auch bei Kurvenfahrten gut ausleuchtet, ohne beim Geradeausfahren den entgegenkommenden Verkehr zu blenden.

Die Aufgabe wird erfindungsgemäß durch die Merkmale des Patentanspruchs 1 gelöst.

Das erfindungsgemäße Verfahren kommt ohne ein mechanisches Verschwenken in horizontaler Richtung bzw. um eine vertikale Achse aus und ist daher kostengünstig mit elektronischem Mitteln zu verwirklichen. Dabei wird ein spezielles Kurvenlicht geschaffen, das den entgegenkommenden Verkehr nicht blendet. Erfindungsgemäß wird der Abblendlichtverteilung eine Nebellichtverteilung in Abhängigkeit von der Kurvenfahrt helligkeitsreguliert aufgeschaltet. Die Helligkeitsregulierung der Nebellichtverteilung erfolgt vorzugsweise über eine getaktete Gleichstromversorgung mit einem modulierten Puls-Pause-Verhältnis.

Gemäß einer weiteren bevorzugten Ausführungsform des Verfahrens wird die Nebellichtverteilung in Abhängigkeit von einer seitlichen Fahrzeugneigung aufgedimmt.

Nach einer weiteren bevorzugten Ausführungsform können die aufeinander abgestimmten Grundlichtverteilungen, nämlich die Abblendlichtverteilung, Nebellichtverteilung und Fernlichtverteilung über eine elektronische Ansteuerung kombiniert werden. Bei einer seitlichen Fahrzeugneigung ist es zudem möglich, durch Verschwenken eines das Kurvenlicht erzeugenden Reflektors um seine Mittelachse, die durch die Fahrzeugneigung veränderte horizontale Ausrichtung des Kurvenlichtes auszugleichen.

Weitere Aufgabe der Erfindung ist es, eine Scheinwerfereinheit zu schaffen, mit der das erfindungsgemäße Verfahren durchführbar ist.

Diese Aufgabe wird erfindungsgemäß durch die Merkmale des Patentanspruchs 7 gelöst.

Durch das erfindungsgemäße Aufschalten der Nebellichtverteilung auf die Abblendlichtverteilung wird auf einfache Weise ein Kurvenlicht mit einer besseren Seitenausleuchtung erzielt.

Gemäß einer bevorzugten Ausführungsform weist die Scheinwerfereinheit einen Reflektor auf, der mit einer Abblendlichtfläche zur Generierung der Abblendlichtverteilung, einer Nebellichtfläche zur Generierung der Nebellichtverteilung und einer Fernlichtfläche zur Generierung der Fernlichtverteilung versehen ist. Diese Grundlichtverteilungen sind aufeinander abgestimmt. Die Abblendlichtverteilung wird durch eine erste Lampe erzeugt und die Nebel- und Fernlichtverteilung wdird durch eine zweite Lampe erzeugt. Die zweite Lampe ist mit einer Glühwendel zur Erzeugung der Nebellichtverteilung und mit einer Glühwendel zur Erzeugung der Fernlichtverteilung versehen. Die Scheinwerfereinheit weist eine elektronische Ansteuerung auf, die als ein auf einem Mikrocontroller basierendes System ausgebildet ist, das Signaleingänge über Algorithmen verknüpft und die Grundlichtverteilungen kombiniert.

Nach einer weiteren bevorzugten Ausführungsform ist der Reflektor um eine horizontale Mittelachse durch einen Elektromotor verschwenkbar. Der Elektromotor wird ebenfalls über die elektronische Ansteuerung angesteuert. Dadurch ist es möglich, eine durch eine seitliche Neigung des Fahrzeuges auftretende Veränderung der horizontalen Ausrichtung des Kurvenlichtes durch Verschwenken des Reflektors auszugleichen.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1: eine Darstellung einer Abblendlichtverteilung auf einer10 m entfernten Wand;
- Figur 2: eine Darstellung einer Nebellichtverteilung auf einer 10 m entfernten Wand;
- Figur 3: eine Darstellung einer Fernlichtverteilung auf einer 10 m entfernten Wand;
- Figur 4: eine Darstellung der Verteilung von Abblendlicht und aufgeschaltetem Nebellicht auf der 10-m-Wand,
- Figur 5: eine Darstellung der Lichtverteilung von Abblendlicht und aufgeschaltetem Fernlicht auf der 10-m- Wand,
- Figur 6: eine vereinfachte Darstellung einer Vorderansicht eine Reflektors;
- Figur 7: eine vereinfachte dreidimensionale Darstellung des Reflektors von Figur 6 und
- Figur 8: eine Seitenansicht eines um eine Mittelachse durch einen Elektromotor schwenkbaren Reflektors mit schematisch dargestellter Ansteuerung.

Eine Fahrzeugscheinwerfereinheit (1) besteht im wesentlichen aus einem Reflektor (2), einer ersten Lampe (3), einer zweiten Lampe (4), einem Elektromotor (5) und einer elektronischen Ansteuerung (31).

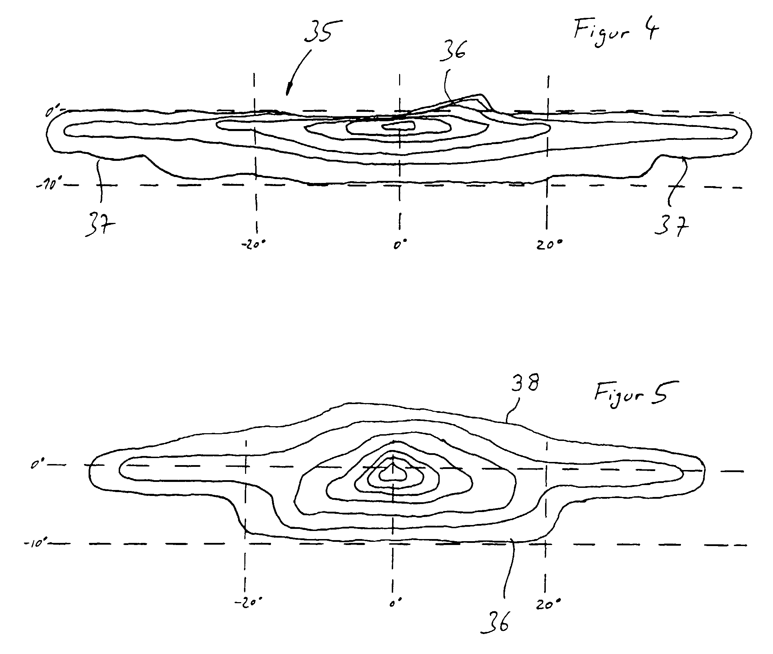

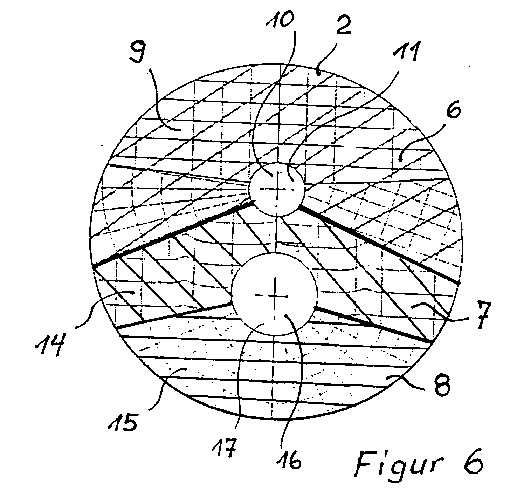

Der Reflektor (2) ist, wie aus Figur 6 zu ersehen ist, in vertikaler Richtung in einen oberen Bereich (6), einen mittleren Bereich (7) und einen unteren Bereich (8) aufgeteilt. Der obere Bereich (6) ist als eine Abblendlichtfläche (9) ausgebildet. Die Abblendlichtfläche (9) weist ein erstes Zentrum (10) mit einer ersten Durchstecköffnung (11) auf. Durch die erste Durchstecköffnung (11) kann von der Rückseite (12) des Reflektors (2) die erste Lampe (3) eingesetzt werden. Die Abblendlichtfläche (9) ist so ausgebildet, daß eine Abblendlichtverteilung (36) eine horizontale Streubreite (13) von etwa ± 20 bis 25 Grad aufweist, siehe Figur 1. Durch die relativ geringe Streubreite (13) wird u.a. eine gute und homogene Vorfeldausleuchtung und große Reichweite erzielt. Der mittlere Bereich (7) ist als Nebellichtfläche (14) und der untere Bereich (8) ist als Fernlichtfläche (15) ausgebildet mit einer Nebellichtverteilung (37) bzw. einer Fernlichtverteilung (38), die jeweils in der Figur 2 bzw. Figur 3 dargestellt sind. Die Nebellichtfläche und die Fernlichtfläche (15) weisen ein zweites Zentrum (16) mit einer zweiten Durchstecköffnung (17) auf. Die zweite Lampe (4) wird von der Rückseite (12) in die zweite Durchstecköffnung (17) des Reflektors (2) eingesteckt. Die Nebellichtfäche (14) ist so ausgebildet, daß das Nebellicht eine horizontale Streubreite (18) von etwa ± 45 bis 50 Grad aufweist. Die Nebellichtverteilung ist auf die Abblendlichtverteilung aufschaltbar. Es ergibt sich dann eine kombinierte Lichtverteilung gemäß Figur 4. Ein Anschluß an das Abblendlicht ist dem Bereich von ± 20 bis 25 Grad mit etwa 4 lx gewährleistet. Die Fernlichtfläche (15) ist so ausgebildet, daß das Fernlicht eine horizontale Streubreite (19) von etwa ± 35 bis 45 Grad aufweist. Das Fernlicht ist auf das Abblendlicht aufschaltbar. Es ergibt sich dann eine weitere kombinierte Lichtverteilung gemäß Figur 5.

Die erste Lampe (3) ist als H7-Lampe mit einer Abblendlichtwendel ausgebildet, die zweite Lampe (4) ist als eine H4-Lampe ausgebildet. Sie weist eine Abblendlichtwendel auf, die zur Erzeugung des Nebellichtes als Nebellichtwendel genutzt wird. Die zweite Lampe (4) weist weiterhin eine Fernlichtwendel zur Erzeugung des Fernlichtes auf.

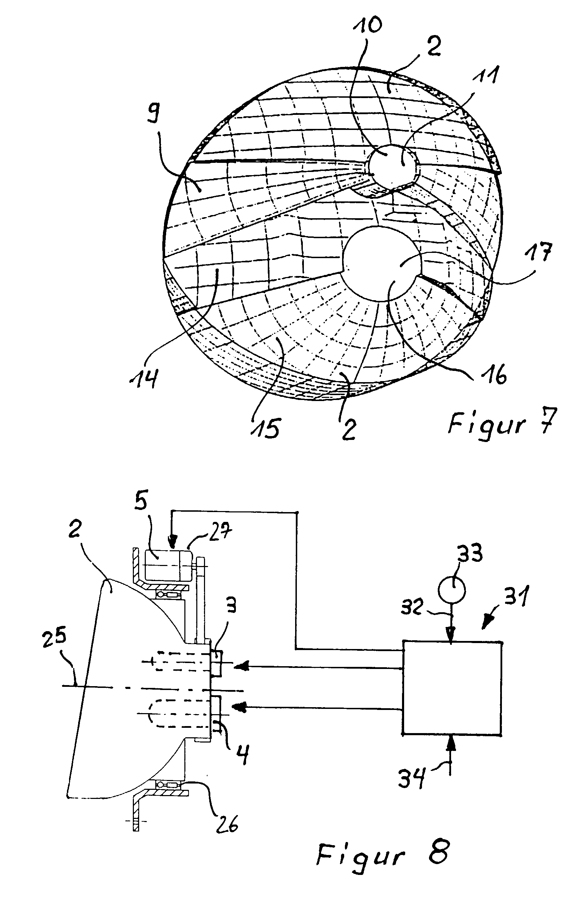

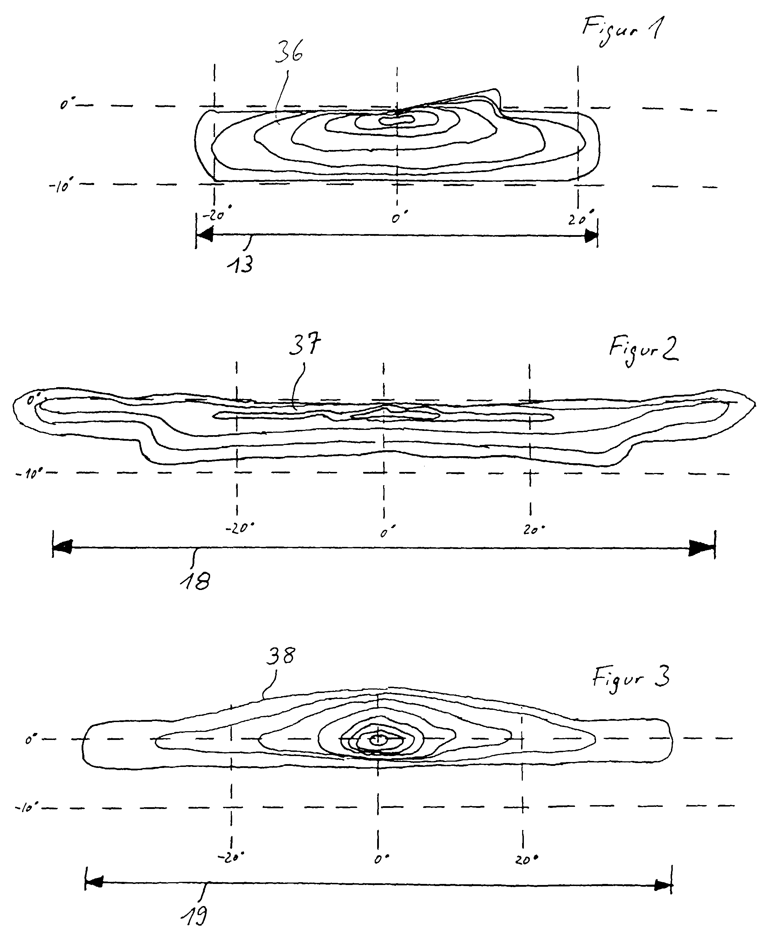

Wie in Figur 8 dargestellt, ist der Reflektor (2) um seine Mittelachse (25) schwenkbar über ein Lager (26) gelagert. Der Elektromotor (5) ist über ein Getriebe (27) mit dem Reflektor (2) verbunden und verschwenkt den Reflektor (2) in Abhängigkeit von einer seitlichen Neigung eines Fahrzeuges. Die elektronische Ansteuerung (31) steuert die erste und die zweite Lampe (3, 4) und den Elektromotor (5). Die elektronische Ansteuerung (31) ist als ein auf einem Mikrocontroller basierendes System ausgebildet, das Signaleingänge, beispielsweise den Signaleingang (32) eines Neigungssensors (33) oder eines von Mikrocontroller basierendes System ausgebildet, das Signaleingänge, beispielsweise den Signaleingang (32) eines Neigungssensors (33) oder eines von einem Fahrzeugführer gesetzten Steuersignals (34), über Algorithmen verknüpft und die Grundlichtverteilungen (36, 37, 38) kombiniert.

Zur Generierung des Kurvenlichtes bzw. der Kurvenlichtverteilung (35) wird der Abblendlichtverteilung (36) eine in ihrer Intensität bzw. Helligkeit variable Nebellichtverteilung (37) aufgedimmt. Die Aufdimmung erfolgt über eine in der elektronischen Ansteuerung (31) enthaltene elektronische Dimmerschaltung. Die Dimmerschaltung ist als eine getaktete Gleichstromversorgung mit einem modulierten Puls-Pause-Verhältnis ausgebildet. Dabei wird das Signal eines Neigungssensors (33) oder eines Sensors zur Registrierung eines Lenkradius von der elektronischen Ansteuerung (31) genutzt, um die Helligkeit der Nebellichtverteilung (37) in Abhängigkeit von der Fahrzeugneigung bei Kurvenfahrt bzw. in Abhängigkeit von dem Lenkradius zu steuern. Das Signal des Neigungssensors (33) wird von der elektronischen Ansteuerung (31) weiterhin genutzt, um den Elektromotor (5) so zu steuern, daß eine Veränderung der Kurvenlichtverteilung (35) in horizontaler Richtung - verursacht durch die Fahrzeugneigung - durch Verschwenken des Reflektors (2) ausgeglichen werden kann.

Grundsätzlich ist es auch möglich, das Kurvenlicht (35) nicht durch einen einzigen Reflektor (2) der Scheinwerfereinheit (1) zu generieren, sondern über zwei Reflektoren, nämlich einen Abblendlichtreflektor eines ersten Scheinwerfers und einen Nebellichtreflektor eines zweiten Scheinwerfers.

## Patentansprüche

1. Verfahren zur Anpassung eines Fahrzeuglichtes bei Kurvenfahrten, wobei ein Kurvenlicht mit einer Lichtverteilung mit einem größeren horizontalen Streubereich als der des Abblendlichtes generiert wird, dadurch gekennzeichnet, dass einem Abblendlicht mit einer Abblendlichtverteilung (36) eine Nebellichtverteilung (37) eines Nebellichtes in Abhängigkeit von der Kurvenfahrt helligkeitsreguliert aufgeschaltet wird.

2. Verfahren nach Anspruch 3, dadurch gekennzeichnet, dass die Nebellichtverteilung (37) durch eine elektronische Dimmerschaltung helligkeitsreguliert wird.

3. Verfahren nach Anspruch 1 oder 2, dadurch gekennzeichnet, dass die Nebellichtverteilung (37) über eine getaktete Gleichstromversorgung mit einem modulierten Puls-Pause-Verhältnis auf die Abblendlichtverteilung aufgeschaltet wird.

4. Verfahren nach Anspruch 2 oder 3, dadurch gekennzeichnet, dass die Nebellichtverteilung (37) in Abhängigkeit von einem Lenkradius auf die Abblendlichtverteilung (36) aufgedimmt wird.

5. Verfahren nach Anspruch 2 oder 3, dadurch gekennzeichnet, dass die Nebellichtverteilung (37) in Abhängigkeit von einer seitlichen Fahrzeugneigung auf die Abblendlichtverteilung (36) aufgedimmt wird.

6. Verfahren nach einem der Ansprüche 1 bis 5, dadurch gekennzeichnet, dass das Abblendlicht, das Nebellicht und ein Fernlicht in ihrer Abblendlicht-, Nebellicht- und Fernlichtverteilung (36, 37, 38) aufeinander abgestimmt sind und über eine elektronische Ansteuerung kombiniert werden können.

7. Scheinwerfereinheit zur Erzeugung eines Kurvenlichtes mit einer ersten Lampe (3) und einer zweiten Lampe (4), eines Reflektors (2), wobei der Reflektor (2) mit einer Abblendlichtfläche (9) zur Generierung einer Abblendlichtverteilung (36) und/ oder mit einer Nebellichtfläche (14) zur Generierung der Nebellichtverteilung (37) versehen ist, dadurch gekennzeichnet, dass eine elektronische Ansteuerung (31) vorgesehen ist, derart, dass der Abblendlichtverteilung (36) in Abhängigkeit von der Kurvenfahrt eine Nebellichtverteilung (37) aufschaltbar ist.

8. Scheinwerfereinheit nach Anspruch 7, dadurch gekennzeichnet, dass der Reflektor (2) mit einer Fernlichtfläche (15) zur Generierung einer Fernlichtverteilung (38) versehen ist, die der Abblendlichtverteilung (36) aufschaltbar ist.

9. Scheinwerfereinheit nach Anspruch 8, dadurch gekennzeichnet, dass der Reflektor (2) um eine horizontale Mittelachse (25) desselben schwenkbar gelagert ist.

10. Scheinwerfereinheit nach einem der Ansprüche 7 bis 9, dadurch gekennzeichnet, dass eine die Abblendlichtverteilung (36) erzeugende erste Lampe (3) und eine die Nebellichtverteilung (37) und Fernlichtverteilung (38) erzeugende zweite Lampe (4) mit der elektronischen Ansteuerung (31) verbunden ist.

11. Scheinwerfereinheit nach Anspruch 10, dadurch gekennzeichnet, dass die elektronische Ansteuerung (31) als ein auf einem Mikrocontroller basierendes System ausgebildet ist, das Signaleingänge (32, 34) über Algorithmen verknüpft und die Abblendlicht-, Nebellicht- und Fernlichtverteilung (36, 37, 38) kombiniert.

12. Scheinwerfereinheit nach Anspruch 10 oder 11, dadurch gekennzeichnet, dass mindestens ein Sensor (33) zur Registrierung einer seitlichen Neigung oder zur Registrierung eines Lenkradius mit der elektronischen Ansteuerung (31) verbunden ist.

## Claims

1. A method of adapting the light beam of a vehicle during cornering, wherein a cornering beam is generated which has a light distribution with a greater horizontal spread than that of the dipped beam, characterised in that a fog beam distribution (37) of a fog beam, the brightness of which is regulated depending on the cornering, is superimposed on a dipped beam which has a dipped beam distribution (36).

2. A method according to claim 1, characterised in that the brightness of the fog beam distribution (37) is regulated by an electronic dimmer circuit.

3. A method according to claims 1 or 2, characterised in that the fog beam distribution (37) is superimposed on the dipped beam distribution via a direct current supply which is supplied with clock pulses with a modulated pulse-pause ratio.

4. A method according to claims 2 or 3, characterised in that the fog beam distribution (37) is superimposed, dimmed depending on a steering radius, on the dipped beam distribution (36).

5. A method according to claims 2 or 3, characterised in that the fog beam distribution (37) is superimposed, dimmed depending on a lateral inclination of the vehicle, on the dipped beam distribution (36).

6. A method according to any one of claims 1 to 5, characterised in that the dipped beam, fog beam and main beam distributions (36, 37, 38) of the dipped beam, fog beam and main beam are matched to each other and can be combined via an electronic triggering system.

7. A headlamp unit for the production of a cornering beam, having a first lamp (3) and a second lamp (4) which are associated with a reflector (2), wherein the reflector (2) is provided with a dipped beam area (9) for generating a dipped beam distribution (36) and/or with a fog beam area (14) for generating the fog beam distribution (37), characterised in that an electronic triggering system (31) is provided such that a fog beam distribution (37) can be superimposed on the main beam distribution (36) depending on the cornering.

8. A headlamp unit according to claim 7, characterised in that the reflector (2) is provided with a main beam area (15) for generating a main beam distribution (38) which can be superimposed on the dipped beam distribution (36).

9. A headlamp unit according to claim 8, characterised in that the reflector (2) is mounted so that it can swivel about a horizontal centre line (25) of the reflector.

10. A headlamp unit according to any one of claims 7 to 9, characterised in that a first lamp (3), which produces the dipped beam distribution (36), and a second lamp (4), which produces the fog beam distribution (37) and the main beam distribution (38), are connected to the electronic triggering system (31).

11. A headlamp unit according to claim 10, characterised in that the electronic triggering system (31) is constructed as a system based on a microcontroller, which associates signal inputs (32, 34) via algorithms and which combines the dipped beam, fog beam and main beam distributions (36, 37, 38).

12. A headlamp unit according to claims 10 or 11, characterised in that at least one sensor (33) for recording a lateral inclination or for recording a steering radius is connected to the electronic triggering system (31).

## Revendications

1. Procédé pour adapter une lumière produite par un véhicule lors du franchissement de courbes, selon lequel une lumière est produite lors du franchissement d'une courbe avec une distribution de lumière comportant une zone de diffusion horizontale plus étendue que celle de la lumière de croisement, caractérisé en ce qu'une distribution (37) d'une lumière anti-brouillard est superposée à une lumière de croisement possédant une distribution de lumière de croisement (36), avec régulation de la luminosité en fonction du déplacement en courbe.

2. Procédé selon la revendication 1, caractérisé en ce que la distribution (37) de la lumière anti-brouillard est réglée, du point de vue luminosité, au moyen d'un circuit formant gradateur électronique de lumière.

3. Procédé selon la revendication 1 ou 2, caractérisé en ce que la distribution (37) de la lumière anti-brouillard est superposée à la distribution de la lumière de croisement au moyen d'une alimentation cadencée en courant continu, avec un taux d'impulsions modulé.

4. Procédé selon la revendication 2 ou 3, caractérisé en ce que la distribution (37) de la lumière anti-brouillard est superposée d'une manière atténuée à la distribution (36) de la lumière de croisement, en fonction d'un rayon de braquage.

5. Procédé selon la revendication 2 ou 3, caractérisé en ce que la distribution (37) de la lumière anti-brouillard est superposée de façon atténuée à la distribution (36) de la lumière de croisement en fonction d'une inclinaison latérale du véhicule.

6. Procédé selon l'une des revendications 1 à 5, caractérisé en ce que les distributions (36, 37, 38) de lumière de croisement, de la lumière anti-brouillard et d'une lumière de longue portée sont accordées les unes sur les autres et que ces lumières peuvent être combinées au moyen d'une commande électronique.

7. Unité de phare pour produire une lumière en courbe, comportant une première lampe (3), une seconde lampe (4) et un réflecteur (2), le réflecteur (2) étant équipé d'une surface (9) délivrant une lumière de croisement, qui sert à produire une distribution (36) de lumière de croisement, et/ou une surface (14) délivrant une lumière anti-brouillard, servant à produire une distribution (37) de lumière anti-brouillard, caractérisée en ce qu'il est prévu une unité de commande électronique (31) de telle sorte que la distribution (37) de la lumière anti-brouillard est superposée à la distribution (36) de la lumière de croisement, en fonction du franchissement d'une courbe.

8. Unité de phare selon la revendication 7, caractérisée en ce que le réflecteur (2) est équipé d'une surface (15) délivrant une lumière de longue portée, servant à produire une distribution (38) de lumière de longue portée, qui peut être superposée à la distribution (36) de lumière de croisement.

9. Unité de phare selon la revendication 8, caractérisée en ce que le réflecteur (2) est monté de manière à pouvoir pivoter autour d'un axe médian horizontal (25) de ce réflecteur.

10. Unité de phare selon l'une des revendications 7 à 9, caractérisée en ce qu'une la première lampe (3), qui produit la distribution (36) de la lumière de croisement, et une seconde lampe (4) produisant une distribution (37) de la lumière anti-brouillard et une distribution (38) de la lumière de longue portée sont reliées à l'unité de commande électronique (31).

11. Unité de phare selon la revendication 10, caractérisée en ce que l'unité de commande électronique (31) est agencée sous la forme d'un système basé sur un microcontrôleur et qui combine les entrées de signaux (32, 34) au moyen d'algorithmes et combine les distributions (36, 37, 38) de la lumière de croisement, de la lumière anti-brouillard et de la lumière de longue portée.

12. Unité de phare selon la revendication 10 ou 11, caractérisée en ce qu'au moins un capteur (33) servant à enregistrer une inclinaison latérale ou à enregistrer un rayon de braquage est relié à l'unité de commande électronique (31).
